# DEMANDE DE BREVET EUROPEEN

(11) **EP 1 482 285 A1**
(43) Date de publication de la demande: **01.12.2004**
(21) Numéro de dépôt: 04356076.2
(22) Date de dépôt: 18.05.2004
(51) Int. Cl.: G01F 23/296, B65F 1/00, G01F 15/06, H04B 7/24

(54) **Détecteur du niveau de remplissage de récipients collecteurs de déchets**

(30) Priorité: 20.05.2003 FR 0306054
(71) Demandeur: Badaroux, Philippe, 38650 Roissard (FR); Paquier, Dominique, 38700 Le Sappey (FR); Habib, Eric, 38000 Grenoble (FR)
(72) Inventeur: Badaroux, Philippe, 38650 Roissard (FR); Paquier, Dominique, 38700 Le Sappey (FR); Habib, Eric, 38000 Grenoble (FR)
(74) Mandataire: Bratel, Gérard

(57) **Abrégé**

Le détecteur (2) est prévu pour être installé sur un conteneur (8) de déchets (9), en particulier à la partie supérieure du conteneur. Il comprend, regroupés dans une réalisation monobloc compacte : un capteur ultrasonore (3) pour la mesure du niveau de remplissage en déchets (9) du conteneur (8), des moyens de captage et de stockage d'énergie, et un émetteur-récepteur radiofréquence avec antenne (14) qui transmet à distance l'information résultant d'une mesure effectuée par le capteur ultrasonore (3). Ce détecteur (2) s'applique à la collecte par apport volontaire et au tri sélectif de déchets ménagers ou autres.

## Description

La présente invention concerne, de façon générale, le domaine de la collecte de déchets ménagers ou autres, et elle a pour objet, plus particulièrement, un détecteur prévu pour être installé sur les conteneurs de collecte de déchets, et équipé pour mesurer le niveau de remplissage de ces conteneurs, et prévu aussi pour transmettre à distance l'information relative au niveau de remplissage mesuré d'un conteneur de collecte des déchets.

Ainsi, l'invention est destinée en particulier au domaine de la collecte, par apport volontaire, de déchets ménagers ou industriels recyclables tels que verre, papier, carton, etc..., dans des conteneurs spécialisés et elle permet, par la mesure et la transmission du niveau de remplissage de ces conteneurs, d'optimiser les tournées des camions de ramassage des déchets, en bénéficiant d'une connaissance "en temps réel" du niveau de remplissage de chaque conteneur, dans une zone géographique particulière.

En l'état actuel, la gestion des tournées des camions de ramassage des déchets collectés dans des conteneurs est basée sur une mesure statistique du degré de remplissage, effectuée par un pesage des conteneurs ou des déchets, lors des tournées de ramassage. Les camions de ramassage, équipés de systèmes de pesage automatique, permettent de construire peu à peu une base de données statistique, visant à optimiser les tournées de ramassage par la connaissance de valeurs moyennes des quantités de déchets collectées dans les conteneurs, pendant un temps donné.

Ce système, basé sur le pesage, conserve plusieurs inconvénients majeurs qui le pénalisent fortement :
- Chaque commune, ou autre collectivité territoriale concernée, possède des caractéristiques différentes des autres, de sorte que la base de données doit être constituée individuellement, pour chaque cas particulier d'application. Il n'est pas possible d'avoir une solution universelle de traitement, quel que soit le site ou le territoire sur lequel est organisé le ramassage des déchets.
- La durée nécessaire à la constitution d'une base de données statistique correcte doit tenir compte des variations saisonnières et de certains événements locaux répétitifs, de sorte que cette constitution de base de données peut prendre plusieurs années. Durant tout ce temps, les ramassages doivent être multipliés et ainsi rendus fréquents, afin de garantir le service et la sécurité de la prestation. Les coûts d'exploitation des premières années sont donc importants.
- Pour limiter les risques de débordement des conteneurs, qui entraîne des pénalités, l'analyse statistique doit prendre en compte un écart-type important, entraînant des ramassages fréquents de conteneurs peu remplis. La maîtrise et la rentabilité de l'exploitation ne sont donc jamais correctement assurées, même après les premières années.
- Les pics d'apport de déchets, liés à des festivités privées ou publiques, ou à des événements particuliers tels que des manifestations sportives, ne sont pas pris en compte par un tel système.
- Enfin, les camions de ramassage doivent être tous équipés d'un système de pesage automatique, ce qui implique des surcoûts d'investissement et de maintenance, ici importants puisqu'il s'agit de matériel de métrologie.

Dans l'ensemble, le système connu basé sur le pesage s'avère ainsi particulièrement coûteux, et malgré cela peu adapté.

Face à cette situation, plusieurs tentatives ont été menées, principalement en Allemagne, dans le domaine de la collecte de déchets par apport volontaire, visant à faire payer les utilisateurs en fonction de leur apport. Il n'en est résulté aucune application concrète.

Une autre proposition, décrite dans le brevet allemand DE 4336334 ou son équivalent le brevet français FR 2711626, est basée sur la création de conteneurs spéciaux de collecte de déchets, équipés de moyens de mesure automatique de leur niveau de remplissage, et de transmission par radio, aux camions de ramassage, de l'information relative au degré de remplissage de chaque conteneur. Il est aussi fait référence à la demande de brevet européen EP 0626569 et à la demande de brevet allemand DE 4321754, qui décrivent des systèmes de transmission d'informations entre des conteneurs de déchets, équipés de capteurs d'état de remplissage, et un poste central.

Plus particulièrement, dans le cas du brevet français précité FR 2711626, le conteneur comporte un capteur de type ultrasonore placé à l'intérieur de la partie supérieure du conteneur, ce capteur et l'électronique associée étant alimentés électriquement par des cellules solaires intégrées dans la paroi du conteneur.

Ceci implique la conception de conteneurs à déchets spécifiques dont la structure, intégrant le capteur et les cellules solaires, reste à créer.

Cette structure devant être commune à tous les fabricants et pour tous types de conteneurs, il en résulte que la solution proposée par les brevets précités est peu réaliste et d'une mise en oeuvre improbable.

De plus, l'organisation de la communication entre les différents conteneurs et une unité centrale, et/ou les véhicules de ramassage, telle qu'elle résulte des documents précités, apparaît inappropriée dans le cas de conteneurs nombreux à "gérer" simultanément. Par exemple, dans le cas de la demande de brevet européen EP 0626569 précitée, la transmission entre les conteneurs et l'unité centrale est unidirectionnelle, c'est-à-dire que les détecteurs de niveau de remplissage sont uniquement émetteurs, ce qui rend nécessaire une horloge interne pour chaque détecteur et une gestion du risque de "collision" des informations en provenance des différents conteneurs.

La présente invention vise à éviter ces inconvénients, en fournissant une solution permettant d'équiper économiquement un grand nombre de conteneurs, neufs ou existants avec un moyen de mesure en "temps réel" de leur niveau de remplissage en déchets collectés, et un moyen de transmission adapté des informations, issues des mesures effectuées, vers un point de réception fixe ou embarqué sur un véhicule.

A cet effet, l'invention a essentiellement pour objet un détecteur pour la mesure du niveau de remplissage des conteneurs de collecte de déchets, ce détecteur étant prévu pour être installé sur un conteneur de déchets, en particulier à la partie supérieure du conteneur, et comprenant lui-même, en combinaison, et regroupés dans une réalisation "monobloc" compacte, des moyens de mesure par ultrasons du niveau de remplissage en déchets du conteneur, des moyens autonomes intégrés de stockage d'énergie, et un émetteur-récepteur radiofréquence apte à transmettre à distance, sur interrogation ou non, l'information résultant d'une mesure effectuée par le capteur ultrasonore de ce détecteur.

Ainsi, l'idée inventive consiste ici à fournir un détecteur complet, autonome, réunissant toutes les fonctions nécessaires et en particulier la fourniture de l'énergie nécessaire à son fonctionnement, ce détecteur pouvant être implanté sur un conteneur de déchets. Un tel détecteur pourra donc équiper tout conteneur, neuf ou déjà en exploitation, quelle que soit la forme de ce conteneur ou son volume ; en particulier, l'implantation de ce détecteur sur le conteneur pourra se faire directement depuis l'extérieur du conteneur, sans intervention délicate à l'intérieur du conteneur. Le détecteur objet de l'invention intègre aussi des composants de radio-communication, et il constitue ainsi un produit nouveau, pouvant être désigné comme "détecteur communicant autonome", ce détecteur réalisant, plus particulièrement, une communication sans fil de liaison.

Dans une forme de réalisation préférée de l'invention, conduisant à une structure "monobloc" compacte, le détecteur comporte un boîtier, logeant ses parties électroniques, le boîtier possédant une embase prévue pour être fixée depuis l'extérieur sur un conteneur, et le capteur de mesure à ultrasons étant fixé sous le boîtier.

Selon un mode d'exécution possible, les moyens autonomes intégrés de stockage d'énergie comprennent au moins un capteur solaire, placé sur la face supérieure du boîtier, et un accumulateur, logé dans le boîtier.

L'émetteur-récepteur radiofréquence du détecteur peut comprendre une antenne de radio-communication montée au-dessus du boîtier, auquel cas un capot translucide est posé et fixé sur le boîtier de manière à recouvrir le ou les capteurs solaires et l'antenne, un tel capot laissant passer la lumière vers le ou les capteurs solaires, et les ondes radio depuis l'extérieur vers l'antenne, et inversement depuis l'antenne vers l'extérieur.

Dans une variante, l'émetteur-récepteur radiofréquence du détecteur comprend une antenne de radio-communication montée au-dessous du boîtier, avec le capteur ultrasonore, un dôme translucide étant posé et fixé sur le boîtier de manière à recouvrir le ou les capteurs solaires. Cette variante, qui évite tout dépassement d'une antenne et d'un capot volumineux vers le haut, procure une résistance accrue du détecteur vis-à-vis d'éventuels chocs et actes de vandalisme, mais elle nécessite que le conteneur ne soit pas en métal, pour permettre une transmission correcte des ondes radio entre l'antenne, placée en position intérieure, et le milieu extérieur.

Le ou les capteurs solaires, placés sur la face supérieure du boîtier, peuvent avantageusement constituer, par leur propre conductivité électrique, un plan de masse électrique pour l'antenne de radio-communication.

Dans un mode de réalisation préféré, relatif à la fonction de communication du détecteur objet de l'invention, l'émetteur-récepteur radiofréquence dudit détecteur constitue d'une part un moyen d'émission à distance de l'information résultant d'une mesure effectuée par le capteur ultrasonore de ce détecteur, et d'autre part un moyen de retransmission de l'information de mesure en provenance d'au moins un autre détecteur analogue, implanté sur un autre conteneur. En d'autres termes, le détecteur objet de la présente invention réalise non seulement la mesure du niveau de remplissage du conteneur associé et la transmission de l'information relative à cette mesure, mais aussi la retransmission de l'information de mesure collectée et émise par au moins un autre détecteur, et il joue ainsi le rôle supplémentaire d'un "relais d'information", en vue de la constitution d'un réseau pouvant comprendre un grand nombre de détecteurs, associés à autant de conteneurs.

Enfin, dans une forme de réalisation préférée, les circuits électroniques du détecteur, objet de l'invention, comprennent un microcontrôleur d'animation de ce détecteur, relié à un module de gestion d'un mode "veille" en basse consommation, lui-même relié à l'émetteur-récepteur radiofréquence, les constituants du détecteur et en particulier son capteur ultrasonore et son émetteur-récepteur étant, par ces moyens, maintenus dans un état de veille quasi-permanente, et n'étant activés que d'une manière périodique ou intermittente, lors d'une interrogation par radio.

Dans l'ensemble, le détecteur pour la mesure du niveau de remplissage des conteneurs de collecte de déchets, objet de l'invention, présente les avantages suivants :
- Ce détecteur, de conception autonome, peut être implanté sur tout conteneur de déchets, ce qui lui permet d'équiper les conteneurs modernes, qui sont aujourd'hui de formes très diverses, ainsi que les conteneurs plus ou moins anciens déjà installés, sans modification de ces conteneurs, excepté de simples perçages à réaliser à leur sommet, au point d'implantation du détecteur.
- Le perçage du conteneur, et l'implantation du détecteur sur ce conteneur, sont réalisables directement de l'extérieur, sans intervention à l'intérieur du conteneur.
- Grâce aux progrès de la technique concernant les composants électroniques à "basse consommation", et les composants intégrés de radio-communication, le détecteur regroupe toutes les fonctions utiles à son fonctionnement dans une réalisation "monobloc" compacte, résistante aux chocs et aux intempéries, ainsi qu'au vandalisme, et faible consommatrice d'énergie, ceci d'autant plus que le détecteur se trouve presque en permanence à l'état de veille, et ne consomme véritablement de l'énergie qu'au moment de son interrogation, laquelle peut intervenir à un instant quelconque, ce qui minimise sa consommation électrique.
- Ce détecteur est économique et immédiatement opérationnel.
- Le même détecteur incorpore de préférence deux types de fonctionnements, c'est-à-dire qu'il peut être utilisé en émetteur simple de l'information qui correspond à la mesure réalisée par son capteur ultrasonore, et aussi en "relais d'information" permettant de faire cheminer les mesures de détecteur à détecteur, donc de conteneur à conteneur.
- Ainsi, ce détecteur permet de constituer aisément un réseau complet maillé autonome de collecte de l'information de remplissage d'un ensemble de conteneurs, s'adaptant à chaque ville ou autre zone géographique gérée, ainsi qu'aux inévitables extensions de cet ensemble de conteneurs.
- Le caractère économique et la commodité d'installation des détecteurs permettent une réduction effective des coûts liés à la collecte des déchets recyclables, donc procurent une augmentation de la rentabilité de l'activité de collecte de ces déchets, permettant d'envisager le ramassage et le recyclage de divers types de déchets actuellement peu exploités.

L'invention sera mieux comprise à l'aide de la description qui suit, en référence au dessin schématique annexé représentant, à titre d'exemples, quelques formes d'exécution de ce détecteur pour la mesure du niveau de remplissage des conteneurs de collecte de déchets :
Figure 1 est un schéma synoptique fonctionnel d'un détecteur conforme à la présente invention ;
Figure 2 est une vue de côté d'un détecteur conforme à l'invention, avec indication sommaire de la partie supérieure d'un conteneur sur lequel est installé ce détecteur ;
Figure 3 est une vue en plan par dessus du détecteur de la figure 2;
Figure 4 est une vue de côté similaire à la figure 2, montrant ce détecteur avec son capot soulevé ;
Figure 5 est une vue de côté d'une variante du détecteur objet de l'invention ;
Figure 6 représente, en perspective, un conteneur de déchets équipé d'un détecteur conforme à l'invention ;
Figure 7 est un plan illustrant la fonction de communication des détecteurs associés à un ensemble de conteneurs, vers un micro-ordinateur centralisateur ;
Figure 8 est une vue similaire à la figure 7, se rapportant à une autre réalisation de cette fonction de communication, vers un véhicule en mouvement.

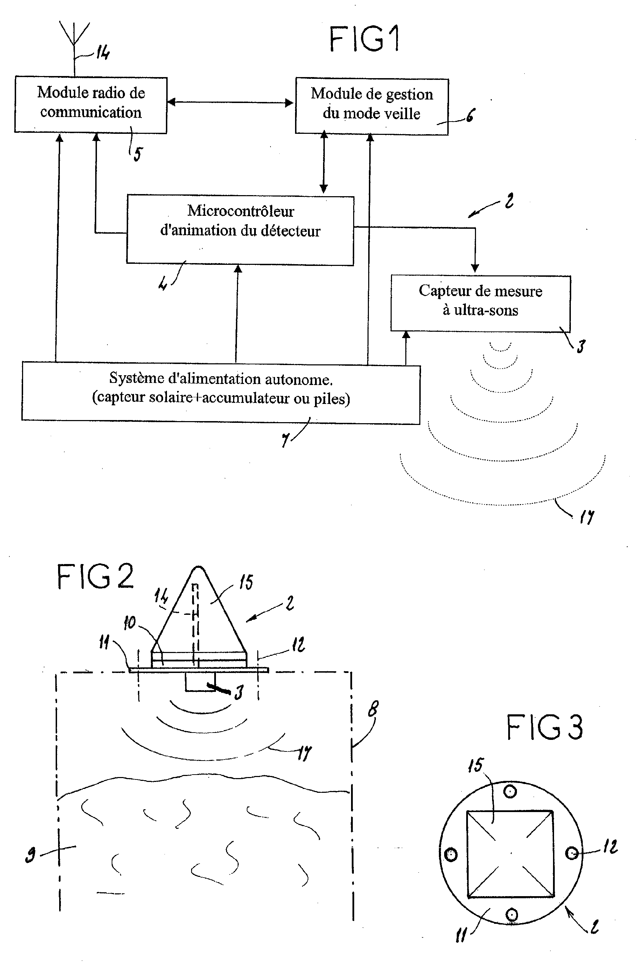

La figure 1 représente, sous la forme d'un schéma-blocs, un détecteur désigné globalement par la référence 2, composé de plusieurs modules interconnectés :
- un capteur de mesure à ultrasons 3, réalisant une mesure télémétrique et/ou volumétrique ;
- un microcontrôleur 4 d'animation du détecteur 2 ;
- un module radio de communication 5 émetteur et récepteur, avec une antenne ;
- un module de gestion du mode "veille" 6 ;
- un système d'alimentation électrique autonome 7, relié aux modules précités.

Comme l'illustre schématiquement la figure 2, le détecteur 2 est installé sur la partie supérieure d'un conteneur 8 de collecte de déchets 9, pour mesurer en temps réel le niveau de remplissage du conteneur 8 par les déchets 9, et pour transmettre cette information vers un poste central.

La figure 2, et les figures suivantes 3 et 4, montrent un premier exemple de réalisation pratique du détecteur 2, correspondant au schéma de principe fonctionnel de la figure 1.

Le détecteur 2 comporte un boîtier isolant 10, logeant les parties électroniques qui sont avantageusement enrobées dans une résine époxy. Le boîtier 10 possède une embase 11 par exemple circulaire, percée de plusieurs trous de fixation 12 (indiqués par leurs axes sur la figure 2). Sur la face supérieure horizontale du boîtier 10 sont placés des capteurs solaires 13, notamment à cellules photovoltaïques, faisant partie du système d'alimentation électrique 7 précité qui comprend aussi un accumulateur, logé dans le boîtier 10. Le capteur de mesure à ultrasons 3 est fixé sous l'embase 11 du boîtier 10. Une antenne de radio-communication 14 est montée au-dessus du boîtier 10. Un capot translucide 15, notamment en matière plastique antichoc, de forme pyramidale dans l'exemple illustré, est posé et fixé sur le boîtier 10, de manière à recouvrir et à protéger les capteurs solaires 13 et l'antenne 14, tout en laissant passer la lumière et les ondes radio.

La figure 5, sur laquelle les éléments correspondant à ceux précédemment décrits sont désignés par les mêmes références, illustre une autre forme de réalisation du détecteur 2, dont la structure assure la résistance au vandalisme. L'antenne 14 est ici montée au-dessous du boîtier 10, comme le capteur 3, tandis que le capot pyramidal du précédent exemple est remplacé par un dôme translucide 16 moins saillant, en matière plastique antichoc, qui recouvre les capteurs solaires. La position inférieure de l'antenne 14, qui la place à l'intérieur du conteneur 8 lorsque le détecteur 2 est installé, nécessite ici un conteneur 8 avec paroi non métallique, notamment une paroi en matière plastique, susceptible d'être traversée par les ondes radio.

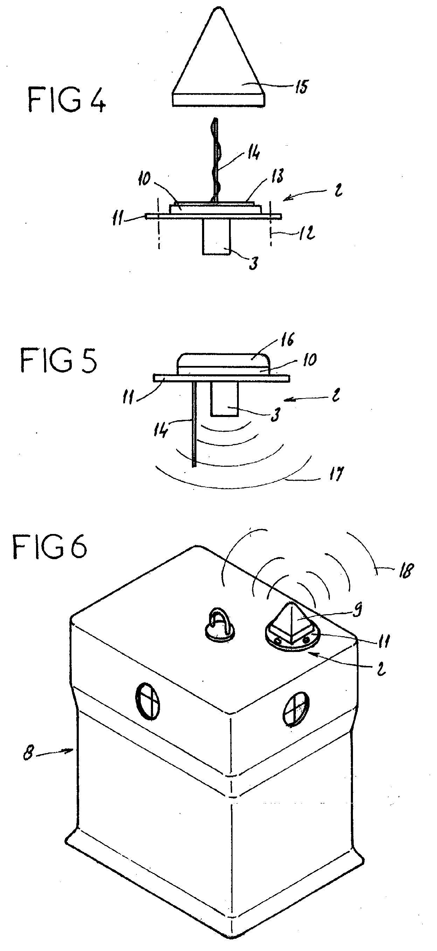

Pour implanter le détecteur 2 sur le conteneur 8, la paroi supérieure horizontale de ce conteneur 8 est percée d'un trou principal en correspondance avec la position du capteur 3, et de petits trous en correspondance avec les trous de fixation 12 de l'embase 11. Le détecteur 2 est posé sur la face supérieure du conteneur 8, et il y est fixé au moyen de rivets ou de vis - voir aussi la figure 6.

Le détecteur 2 se trouvant ainsi implanté sur le conteneur 8, son capteur ultrasonore 3 prend place à l'intérieur du conteneur 8, en regard du sommet des déchets 9 collectés, et ce capteur 3 assure la mesure du niveau de remplissage par émission et réception d'ondes ultrasonores symbolisées en 17 sur les figures 1, 2 et 5. Plus particulièrement, le capteur 3 comporte une pastille piézo-électrique, laquelle émet une courte impulsion ultrasonore qui est renvoyée par les déchets 9 entassés dans le conteneur 8. Le temps qui s'écoule entre le départ de l'impulsion et son retour après écho sur le niveau supérieur des déchets 9 donne directement la hauteur libre dans le conteneur 8. L'antenne 14, associée au module radio interne, assure la transmission à distance de cette information de mesure, par ondes radio symbolisées en 18 sur la figure 6.

En service, sous le contrôle du module de gestion du mode "veille" 6, les composants du détecteur 2 sont maintenus en veille permanente, et ils ne sont activés que lors d'une interrogation par radio, par exemple une fois par jour, et pendant un temps très court, dans un but d'économie d'énergie. Au moment de l'interrogation, le détecteur 2 effectue une mesure du niveau de remplissage en déchets 9 du conteneur 8, et il transmet cette information, par son antenne 14, vers un concentrateur d'informations ou vers un autre détecteur similaire, associé à un autre conteneur.

Ceci implique que le détecteur 2 peut être utilisé, du point de vue de la communication, soit en émetteur simple, soit en "relais d'information" permettant de faire cheminer les mesures de détecteur en détecteur, jusqu'à un relais de transmission principal, alimenté par le secteur, qui permet une transmission à longue distance vers un poste central de recueil et traitement des informations.

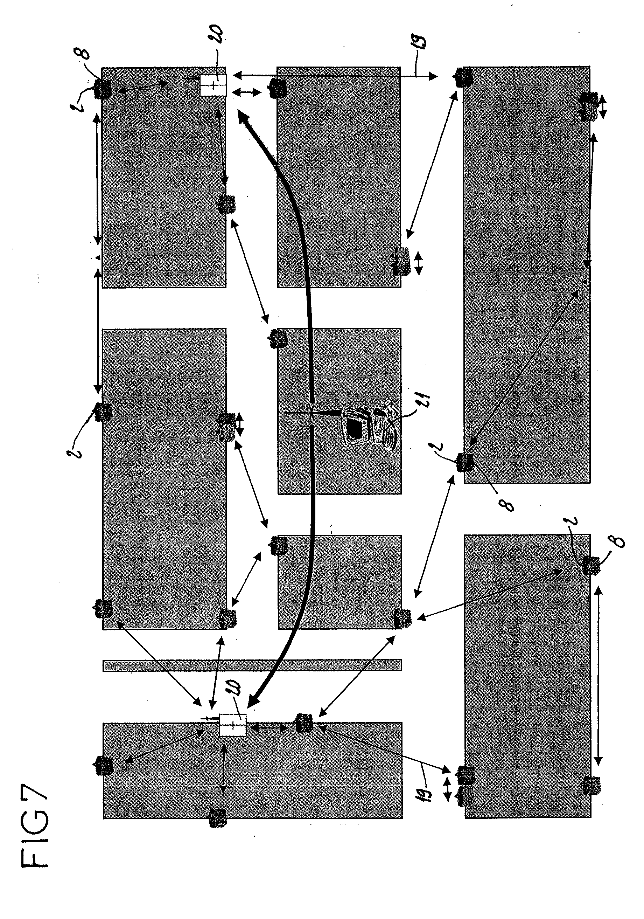

Ceci est illustré par la figure 7, qui montre le plan d'un quartier de ville ou d'une ville, dans lequel sont disséminés des conteneurs 8 tous équipés de détecteurs 2. Les doubles flèches 19 illustrent les communications radio bidirectionnelles entre les détecteurs 2, dont certains au moins ont une fonction supplémentaire de relais de transmission. Les relais principaux sont indiqués en 20, et le poste central en 21, ce poste central pouvant être constitué par un micro-ordinateur.

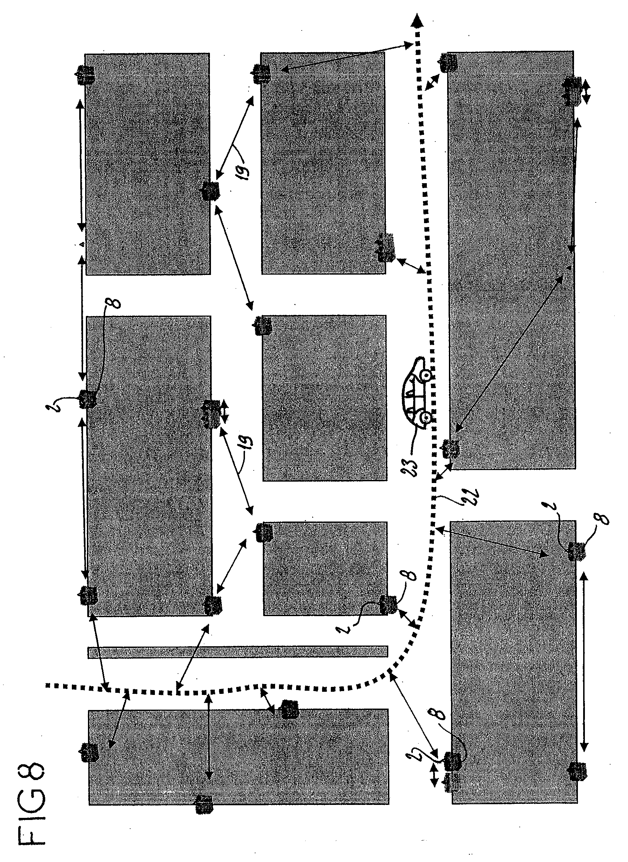

Dans une variante simplifiée, illustrée par la figure 8, le relevé des mesures issues des différents détecteurs 2 est fait par un véhicule léger 23, équipé d'un système de communication permettant la collecte des informations, le véhicule 23 se déplaçant dans la zone urbaine concernée selon un trajet prédéfini indiqué par la ligne pointillée 22, en passant à proximité d'un certain nombre de conteneurs 8. Dans ce cas également, il est fait utilisation de la fonction de "relais d'information" de certains détecteurs 2.

L'invention est ainsi applicable à la gestion de la collecte et du tri sélectif de déchets ménagers et autres, de toutes sortes : verre, papier, carton, etc...

L'on ne s'éloignerait pas du cadre de l'invention, telle que définie dans les revendications annexées :
- en modifiant les formes constructives du détecteur, ou l'agencement des composants de ce détecteur ;
- en utilisant sur ce détecteur, comme moyens d'alimentation autonome en énergie, non pas des capteurs solaires associés à un accumulateur, mais des piles électriques ;
- en utilisant tout genre d'antenne de radio-communication, telle qu'une antenne de type imprimée, une telle antenne notamment de forme circulaire étant directement imprimée dans le détecteur, cette variante étant avantageusement applicable en cas d'utilisation de piles ;
- en prévoyant tous aménagements complémentaires, tels que la mise à profit de la conductivité électrique des capteurs solaires pour réaliser le plan de masse électrique de l'antenne de communication ;
- en utilisant toutes modalités de mesure du degré de remplissage des conteneurs : mesure télémétrique, mesure volumétrique, mesure en continu (tous niveaux intermédiaires) ou mesure par "tranches", etc... ;
- en implantant ce détecteur sur des conteneurs de toutes formes et dimensions, et en tous matériaux, destinés à la collecte de tous types de déchets, qu'il s'agisse de conteneurs existants ou restant à créer ;
- en utilisant toutes configurations de réseaux pour la transmission et le regroupement des informations en provenance d'un ensemble de détecteurs.

## Revendications

1. Détecteur pour la mesure du niveau de remplissage des conteneurs de collecte de déchets, le détecteur (2) étant prévu pour être installé sur un conteneur (8) de déchets (9), en particulier à la partie supérieure du conteneur (8), **caractérisé en ce qu**'il comprend, en combinaison, et regroupés dans une réalisation "monobloc"compacte, des moyens de mesure (3) par ultrasons (17) du niveau de remplissage en déchets (9) du conteneur (8), des moyens autonomes intégrés (7, 13) de stockage d'énergie, et un émetteur-récepteur radiofréquence (5, 14) apte à émettre à distance, sur interrogation ou non, l'information résultant d'une mesure effectuée par le capteur ultrasonore (3) de ce détecteur (2).

2. Détecteur selon la revendication 1, **caractérisé en ce que** son émetteur-récepteur radiofréquence (5, 14) constitue d'une part un moyen d'émission à distance de l'information résultant d'une mesure effectuée par le capteur ultrasonore (3) de ce détecteur (2), et d'autre part un moyen de retransmission de l'information de mesure en provenance d'au moins un autre détecteur (2) analogue, implanté sur un autre conteneur (8).

3. Détecteur selon la revendication 1 ou 2, **caractérisé en ce qu'**il comporte un boîtier (10), logeant ses parties électroniques (4, 5, 6), le boîtier (10) possédant une embase (11) prévue pour être fixée depuis l'extérieur sur un conteneur (8), et le capteur de mesure à ultrasons (3) étant fixé sous le boîtier (10).

4. Détecteur selon la revendication 3, **caractérisé en ce que** les moyens autonomes intégrés (7) de stockage d'énergie comprennent au moins un capteur solaire (13), placé sur la face supérieure du boîtier (10), et un accumulateur, logé dans le boîtier (10).

5. Détecteur selon la revendication 4, **caractérisé en ce que** l'émetteur-récepteur radiofréquence comprend une antenne (14) de radio-communication, montée au-dessus du boîtier (10), un capot translucide (15) étant posé et fixé sur le boîtier (10) de manière à recouvrir le ou les capteurs solaires (13) et l'antenne (14).

6. Détecteur selon la revendication 4, **caractérisé en ce que** le l'émetteur-récepteur radiofréquence comprend une antenne (14) de radio-communication montée au-dessous du boîtier (10), avec le capteur ultrasonore (3), un dôme translucide (16) étant posé et fixé sur le boîtier (10) de manière à recouvrir le ou les capteurs solaires (13).

7. Détecteur selon l'une quelconque des revendications 4 à 6, **caractérisé en ce que** le ou les capteurs solaires (13), placés sur la face supérieure du boîtier (10), constituent par leur propre conductivité électrique un plan de masse électrique pour l'antenne (14) de radio-communication.

8. Détecteur selon l'une quelconque des revendications 1 à 7, **caractérisé en ce que** ses circuits électroniques comprennent un microcontrôleur (4) d'animation de ce détecteur (2), relié à un module de gestion d'un mode "veille" (6) en basse consommation, lui-même relié à l'émetteur-récepteur radiofréquence (5), les constituants du détecteur (2) et en particulier son capteur ultrasonore (3) étant, par ces moyens, maintenus dans un état de veille quasi-permanente, et n'étant activés que d'une manière périodique ou intermittente, lors d'une interrogation par radio.
